# FASCICULE DE BREVET EUROPEEN

(11) **EP 2 976 915 B1**
(45) Date de publication et mention de la délivrance du brevet: **03.05.2023**
(21) Numéro de dépôt: 14705974.5
(22) Date de dépôt: 04.02.2014
(51) Int. Cl.: H04W 48/18

(54) **PROCÉDÉ ET DISPOSITIF DE GESTION DE LA CONNECTIVITÉ D'UN TERMINAL PAR UN SERVEUR MOBILE DANS UN RÉSEAU DE TÉLÉCOMMUNICATIONS**
VERFAHREN UND VORRICHTUNG ZUR VERWALTUNG DER KONNEKTIVITÄT EINES ENDGERÄTS MITTELS EINES MOBILEN SERVERS IN EINEM TELEKOMMUNIKATIONSNETZWERK
METHOD AND DEVICE FOR MANAGING THE CONNECTIVITY OF A TERMINAL BY MEANS OF A MOBILE SERVER IN A TELECOMMUNICATIONS NETWORK

(30) Priorité: 18.03.2013 FR 1352389
(43) Date de publication de la demande: 27.01.2016
(73) Titulaire: AIRBUS DS SAS, 78990 Elancourt (FR)
(72) Inventeur: PATEROUR, Olivier, F-78280 Guyancourt (FR)
(74) Mandataire: Cabinet Camus Lebkiri
(86) Numéro de dépôt international: PCT/EP2014/000279
(87) Numéro de publication internationale: WO 2014/146743

(56) Documents cités:
- EP-A1- 2 415 895
- WO-A1-2012/166671
- US-A1- 2006 198 361
- US-A1- 2013 031 234

## Description

### DOMAINE TECHNIQUE ET OBJET DE L'INVENTION

La présente invention se rapporte au domaine des télécommunications et plus particulièrement à la gestion de la connectivité d'un terminal pour la communication à travers un réseau de télécommunications.

La présente invention concerne ainsi un serveur mobile, un système et un procédé de gestion de la connectivité d'au moins un terminal par un serveur mobile pour la communication à travers au moins un réseau de télécommunications.

### ETAT DE LA TECHNIQUE

De manière connue, un terminal se connecte à un réseau de télécommunications afin d'échanger des données applicatives avec, par exemple, un autre terminal ou un serveur d'application, sur un lien de communication établi à travers ledit réseau. Un tel réseau de télécommunications peut être un réseau du type Wireless Local Area Network (WLAN) ou du type Wireless Wide Area Network (WWAN) tel que par exemple un réseau Global System for Mobile (GSM) Communications, Universal Mobile Télécommunications System (UMTS) ou Long-Term Evolution Advanced (4G-LTE Advanced). Par les termes « données applicatives », on entend des données de niveau applicatif (niveau 7) dans le modèle Open Systems Interconnection (OSI), telles que par exemple des données de communication vocale, des fichiers etc.

Afin de se connecter à un réseau, le terminal doit préalablement obtenir des paramètres de connectivité lui permettant d'établir ledit lien de communication. De tels paramètres de connectivité sont stockés de manière connue dans la mémoire d'un serveur de connexion relié au réseau qui les communique au terminal, par exemple sur requête, à travers le réseau. Le terminal utilise ensuite les paramètres de connectivité reçus pour se connecter au réseau au niveau d'une entité fixe du réseau appelée point d'accès fixe, telle que par exemple une passerelle ou une borne intégrée au réseau, pour pouvoir échanger des données applicatives à travers le réseau avec un autre terminal ou un serveur d'application.

Cependant, il n'est pas toujours possible pour un terminal de se connecter à un tel point d'accès, par exemple, lorsque le terminal est mobile mais n'est pas dans la couverture réseau du point d'accès ou bien lorsqu'il n'est pas apte à communiquer avec le point d'accès.

Afin de remédier à ces inconvénients, il est connu pour un terminal de se connecter à un point d'accès mobile au réseau (Mobile Access Point ou MAP en langue anglaise) qui est apte à établir une connexion à travers ledit réseau afin de communiquer via ledit point d'accès mobile à travers le réseau.

Cependant, le point d'accès mobile doit tout d'abord établir un lien de communication avec le serveur de connexion à travers le réseau pour obtenir les paramètres de connectivité du terminal afin de permettre au terminal de se connecter au point d'accès mobile et de communiquer à travers le point d'accès et le réseau, ce qui est chronophage et complexe et présente donc un inconvénient.

De plus, l'échange des paramètres de connectivité entre le serveur de connexion et le point d'accès mobile d'une part et/ou la gestion de la connectivité du terminal par le point d'accès mobile d'autre part sont généralement réalisés en utilisant un protocole spécifique dit « propriétaire » et il faut alors que le serveur de connexion soit apte à gérer les différents protocoles propriétaires utilisés par les différents types de points d'accès mobiles, ce qui présente un autre inconvénient.

Un autre exemple se trouve dans WO2012/166671 et US2013/031234.

### PRESENTATION GENERALE DE L'INVENTION

La présente invention a pour but de remédier à ces inconvénients en proposant une solution simple, ouverte et efficace de gestion de la connectivité d'un terminal ou de plusieurs terminaux de différentes natures par un serveur mobile pour la communication, via ledit serveur mobile, à travers un ou une pluralité de réseaux de télécommunications.

L'invention est définie par les revendications indépendantes annexées et d'autres modes de réalisation sont décrits par les revendications dépendantes.

Toute référence à des inventions ou à des modes de réalisation n'entrant pas dans le cadre des revendications indépendantes doit être interprétée comme des exemples utiles à la compréhension de l'invention.

A cet effet, l'invention a tout d'abord pour objet un serveur mobile de gestion de la connectivité d'au moins un terminal pour la communication à travers un ou une pluralité de réseaux de télécommunications, le serveur mobile comprenant :
- au moins un module de communication terminal configuré pour communiquer avec ledit terminal,
- une pluralité de modules de communication réseau configurés pour communiquer avec une pluralité de réseaux de télécommunications,
- une zone mémoire dans laquelle sont stockées des valeurs de paramètres de connectivité du terminal permettant au terminal de se connecter au serveur mobile,
le serveur mobile étant configuré pour :
- se connecter à une pluralité de réseaux de télécommunications via la pluralité de modules de communication réseau,
- extraire de la zone mémoire un ensemble de valeurs de paramètres de connectivité du terminal,
- autoriser ou non, à partir de l'ensemble de valeurs de paramètres de connectivité extrait, la connexion du terminal via au moins l'un des modules de communication terminal de sorte que le terminal puisse communiquer des données applicatives à travers au moins l'un des réseaux de télécommunications via au moins ledit module de communication terminal et au moins l'un des modules de communication réseau.

Par les termes « ensemble de valeurs de paramètres de connectivité », on entend un ou une pluralité de valeurs de paramètres permettant d'autoriser ou non la connexion d'un terminal au serveur mobile pour la communication du terminal via le serveur mobile à travers au moins l'un des réseaux de télécommunications.

Le serveur mobile selon l'invention est donc un point d'accès mobile configuré pour gérer localement la connectivité d'un ou d'une pluralité de terminaux, de préférence de types différents, et permettre à ceux-ci de communiquer à travers un ou une pluralité de réseaux, de préférence de types différents, via le serveur mobile.

Le serveur mobile gère donc localement, d'une part, sa propre connectivité à un ou plusieurs réseaux puis, d'autre part, la connectivité des terminaux au serveur mobile. Une fois le ou les terminaux connectés au serveur mobile, celui-ci agit comme un relais pour les communications de données applicatives du ou des terminaux à travers le ou les réseaux.

Les terminaux ne sont donc pas connectés directement à un réseau, ce qui permet de simplifier leur connexion sur des modules de communication terminal différents puisque celle-ci est gérée de manière centralisée par le serveur mobile et ce qui permet aussi d'éviter la gestion de la connectivité du ou des terminaux directement par un serveur de connexion situé dans le réseau. Une telle centralisation de la gestion de la connectivité du ou des terminaux au niveau du serveur mobile rend leur connexion au(x) réseau(x), via le serveur mobile, aisée et efficace.

Le serveur mobile peut en outre se déplacer en gérant sa propre connectivité au réseau sans qu'il y ait besoin de modifier la connectivité du ou des terminaux qui lui sont déjà connectés. En d'autres termes, le serveur mobile gère localement la connectivité du ou des terminaux qui n'ont donc pas besoin de se reconnecter à un point fixe d'accès au réseau différent au fur et à mesure que le serveur mobile et le ou les terminaux se déplacent, le serveur mobile gérant lui-même la connexion au(x) réseau(x), par exemple à travers un ou plusieurs points fixes d'accès au réseau.

Chaque module de communication réseau permet au serveur mobile de communiquer avec l'un des réseaux et peut être par exemple basé sur les normes Wireless Wide Area Network (WWAN), Wireless Local Area Network (WLAN). Le serveur mobile peut ainsi comprendre avantageusement une pluralité de modems du type WWAN ou WLAN permettant chacun l'accès à un réseau de télécommunications différent ou un accès différent à un même réseau de télécommunications. Le ou les réseaux de télécommunications peuvent être par exemple du type WWAN, WLAN, Private Mobile Radio (PMR), satellite etc.

La pluralité de modules de communication réseau peut permettre au serveur mobile d'établir, pour un terminal donné, un premier lien de communication avec un premier réseau de télécommunications et un second lien de communication avec un second réseau de télécommunications. Ainsi, par exemple, si l'un des modules de communication réseau ou l'un des liens de communication est défectueux, la communication de données applicatives échangées sur le lien de communication défectueux peut être basculée entièrement sur le lien de communication non défectueux. Par exemple encore, des données d'authentification du terminal au réseau peuvent être communiquées sur le premier lien de communication et des données applicatives peuvent être communiquées sur le second lien de communication.

Un module de communication terminal peut être, par exemple, basé sur la norme du type Ethernet Local Area Network (LAN) ou bien Universal Serial Bus (USB) ou bien encore Wireless Local Area Network (WLAN) pour lequel le module peut être un serveur WLAN. Une pluralité de modules de communication terminal de types différents permet avantageusement à une pluralité de terminaux de se connecter au(x) réseau(x) via le serveur mobile de manière différente (WLAN, câble USB, câble Ethernet...) et simultanément. Dans ce cas, le serveur mobile est configuré pour fournir un ensemble de valeurs de paramètres de connectivité, par exemple différent, à chaque terminal.

Afin d'autoriser ou non la communication de données applicatives du terminal à travers au moins l'un des réseaux de télécommunications via le module de communication terminal et au moins l'un des modules de communication réseau, le serveur mobile est de préférence configuré pour :
- établir une connexion avec un terminal via au moins un des modules de communication terminal, par exemple de type WLAN ou LAN, pour échanger des informations permettant le contrôle d'accès du terminal et/ou la configuration d'adressage réseau du terminal et/ou,
- analyser et/ou comparer une information reçue d'un terminal permettant le contrôle d'accès dudit terminal à partir de l'ensemble de valeurs de paramètres de connectivité extrait de la zone mémoire, et/ou,
- déterminer la configuration d'adressage réseau d'un terminal, par exemple en allouant une adresse réseau, par exemple du type Internet Protocol (IP), à un terminal à partir d'un ensemble de valeurs de paramètres de configuration d'adressage réseau extrait de la zone mémoire,
- fournir au terminal une ou plusieurs valeurs de l'ensemble de valeurs de paramètres de connectivité extrait de la zone mémoire, tel que par exemple une adresse réseau IP, et/ou,
- permettre l'authentification du terminal, par exemple localement à partir de paramètres d'authentification stockés dans la zone mémoire ou bien à distance en communiquant avec un serveur d'authentification situé dans l'un des réseaux, par exemple en utilisant un protocole d'authentification basé sur la norme connue 802.1x.

Une information permettant le contrôle d'accès d'un terminal au serveur mobile peut être, par exemple, l'adresse physique Medium Access-Control (MAC) du terminal qui est unique. Par les termes « adresse physique », on entend l'adresse ou identifiant MAC du terminal du type au niveau de la couche de liaison du modèle Open Systems Interconnection (OSI).

L'adresse MAC peut être filtrée, c'est-à-dire comparée, selon des règles de filtrage définies dans les paramètres de connectivité stockés dans la zone mémoire. Par exemple, le filtrage peut consister à déterminer si l'adresse MAC fait partie d'une liste d'adresses MAC autorisées (« white list » en langue anglaise) ou non autorisées (« black list » en langue anglaise) stockée dans la zone mémoire dans un paramètre de liste de filtrage.

Selon une caractéristique de l'invention, les paramètres de connectivité sont organisés dans la zone mémoire sous la forme d'une arborescence comprenant une pluralité d'objets hiérarchisés regroupant chacun un ou une pluralité de paramètres de connectivité.

De préférence, l'arborescence est du type Open Mobile Alliance (OMA) et les objets sont manipulés en utilisant le protocole Open Mobile Alliance Device Management. Le protocole OMA « Device Management » (OMA DM) développé dans le cadre d'Open Mobile Alliance permet de réaliser la connexion d'un point d'accès mobile à un réseau à travers son objet « Connectivity Management » qui définit une sous-partie « Network Access Point » mais ne permettait pas, avant la présente invention, de gérer la connectivité d'un ou plusieurs terminaux à un point d'accès mobile afin que ceux-ci communiquent à travers le réseau.

L'utilisation d'un tel protocole, ouvert, permet au serveur mobile de se connecter à tout type de réseau dont les paramètres de connectivité sont organisés selon le modèle OMA alors que les solutions existantes de routeur mobile sont basées sur l'utilisation d'un protocole propriétaire spécifique incompatible avec un réseau dont les paramètres de connectivité sont organisés selon le modèle OMA et manipulés en utilisant le protocole OMA DM.

Les valeurs des paramètres de connectivité peuvent être copiées dans la zone mémoire à partir d'un serveur de connexion situé dans au moins l'un des réseaux. Dans ce cas, le serveur de connexion comprend un serveur OMA et le serveur mobile comprend un client OMA. Les valeurs des paramètres de connectivité peuvent être copiées dans la zone mémoire par exemple une première fois en usine puis ensuite mis à jour sur requête du serveur mobile (mode dit « pull ») ou sur envoi du serveur de connexion (mode dit « push »).

Une pluralité d'objets spécifiques au serveur mobile peut ainsi être définie au niveau du serveur mobile sous forme d'objets OMA, notamment pour gérer la connectivité de terminaux sur des interfaces de communication de types différents.

Ainsi, par exemple, le serveur mobile peut gérer la connexion d'un terminal à travers un lien de communication du type WLAN ou LAN, l'attribution d'adresses réseau Internet Protocol (IP) aux terminaux, le filtrage d'adresses physiques MAC des terminaux et/ou l'authentification des terminaux, ce que ne gérerait pas un point fixe d'accès au réseau de l'art antérieur. Ces fonctions peuvent être définies dans des objets de l'arborescence OMA stockée dans la zone mémoire du serveur mobile.

Le modèle OMA est en outre simple et aisé à utiliser de sorte qu'il est particulièrement approprié pour gérer la connectivité d'un terminal. L'utilisation d'une arborescence du type OMA pour gérer la connectivité localement au niveau du serveur mobile permet de palier certains inconvénients. En effet, dans l'art antérieur, la gestion de la connectivité d'un terminal est gérée différemment selon que le terminal se connecte au réseau directement (gestion de la connectivité par le réseau) ou via un point d'accès mobile (gestion en protocole propriétaire). De plus, dans l'art antérieur, les paramètres de connectivité ne sont pas organisés sous forme d'une arborescence de type OMA qui permet de simplifier de manière notable leur stockage, leur gestion et la communication de leurs valeurs entre le point d'accès mobile et le serveur OMA DM d'une part et entre le point d'accès mobile et le ou les terminaux d'autre part. L'utilisation d'une arborescence du type OMA permet au serveur mobile d'être compatible avec tout réseau dont les paramètres de connectivité sont organisés selon le modèle ouvert OMA.

De manière avantageuse, le serveur mobile comprend un routeur pour aiguiller les données applicatives d'un terminal à travers le ou les réseaux.

L'invention concerne aussi un système de gestion de la connectivité d'au moins un terminal à au moins un réseau de télécommunications, ledit système comprenant :
- au moins un réseau de télécommunications, de préférence une pluralité,
- un serveur mobile telle que présenté précédemment,
- au moins un terminal configuré pour :
   - établir une connexion via au moins un des modules de communication terminal, par exemple de type WLAN ou LAN, pour échanger des informations permettant le contrôle d'accès dudit terminal et/ou la configuration d'adressage réseau dudit terminal et/ou,
   - communiquer des données applicatives à travers au moins l'un des réseaux de télécommunications via au moins un des modules de communication terminal et au moins un des modules de communication réseau.

De préférence, le terminal est configuré pour recevoir, du serveur de mobile, au moins une valeur de l'ensemble de valeurs de paramètres de connectivité extrait de la zone mémoire lui permettant de se connecter au serveur mobile par un module de communication terminal.

Selon un aspect de l'invention, le système comprend une pluralité de terminaux, de préférence de types différents, connectés au serveur mobile. Par exemple, un premier terminal peut-être du type smartphone ou tablette et un second terminal peut-être du type ordinateur, par exemple portable.

L'invention concerne aussi un procédé, mis en oeuvre par un serveur mobile tel que présenté précédemment, de gestion de la connectivité d'au moins un terminal pour la communication du terminal via le serveur mobile à travers un ou une pluralité de réseaux de télécommunications, le procédé comprenant :
- une étape de connexion à au moins un d'une pluralité de réseaux de télécommunications via au moins un de la pluralité de modules de communication réseau,
- une étape d'extraction de la zone mémoire d'un ensemble de valeurs de paramètres de connectivité du terminal,
- une étape d'autorisation ou non, à partir de l'ensemble de valeurs de paramètres de connectivité extrait, de la connexion du terminal via au moins l'un des modules de communication terminal de sorte que le terminal puisse communiquer des données applicatives à travers au moins l'un des réseaux de télécommunications via au moins ledit module de communication terminal et au moins l'un des modules de communication réseau.

De préférence, le procédé comprend :
- une étape de connexion d'un terminal via au moins un des modules de communication terminal, par exemple de type WLAN ou LAN, pour échanger des informations permettant le contrôle d'accès du terminal et/ou la configuration d'adressage réseau du terminal et/ou,
- une étape d'analyse et/ou de filtrage d'une information reçue permettant le contrôle d'accès d'un terminal à partir de l'ensemble de valeurs de paramètres de connectivité extrait de la zone mémoire, et/ou,
- une étape de détermination de la configuration d'adressage réseau d'un terminal, par exemple en allouant une adresse réseau, par exemple du type Internet Protocol (IP), à un terminal à partir d'un ensemble de valeurs de paramètres de configuration d'adressage réseau extrait de la zone mémoire, et/ou,
- une étape de fourniture à un terminal d'une ou plusieurs valeurs de l'ensemble de valeurs de paramètres de connectivité extrait de la zone mémoire, tel que par exemple une adresse réseau IP, et/ou,
- une étape d'authentification d'un terminal, par exemple localement à partir de paramètres d'authentification stockés dans la zone mémoire ou bien à distance en communiquant avec un serveur d'authentification situé dans l'un des réseaux, par exemple en utilisant un protocole d'authentification basé sur la norme connue 802.1x et/ou,
- une étape de communication d'un terminal à travers le ou les réseaux via le ou les module de communication terminal et au moins un module de communication réseau.

L'étape d'analyse d'une information reçue permettant le contrôle d'accès d'un terminal peut consister, par exemple, en une étape de filtrage d'une adresse physique MAC tel que présenté précédemment.

Le filtrage et l'authentification peuvent être réalisés par type de module de communication terminal (WLAN, Ethernet, USB...). Le procédé peut aussi comprendre une étape préliminaire de réception de l'adresse physique MAC du terminal.

De préférence encore, l'étape de fourniture comprend la fourniture de valeurs de paramètres d'authentification du terminal et/ou de paramètres de configuration de l'adresse réseau du terminal et/ou de paramètres d'accès radio ou filaire. La fourniture de ces valeurs de paramètres par le serveur mobile permet notamment d'éviter au terminal d'effectuer une requête au réseau.

L'invention concerne aussi un support comprenant des instructions exécutables par un ordinateur pour la mise en oeuvre du procédé présenté précédemment.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre le système de gestion de la connectivité selon l'invention.
La figure 2 illustre une forme de réalisation du module de contrôle du serveur mobile selon l'invention.
La figure 3 illustre un exemple d'arborescence de l'objet « Vendor » de l'arborescence de paramètres de connectivité utilisé par le serveur mobile selon l'invention.
La figure 4 illustre un exemple d'arborescence de l'objet « MAP » de l'arborescence de la figure 3.
La figure 5 illustre un exemple d'arborescence de l'objet « IP » de l'arborescence de la figure 4.
La figure 6 illustre un exemple d'arborescence de l'objet « WLAN » de l'arborescence de la figure 4.
La figure 7 illustre un mode de réalisation du procédé selon l'invention.

### DESCRIPTION DETAILLEE DE L'INVENTION

### Description du système selon l'invention

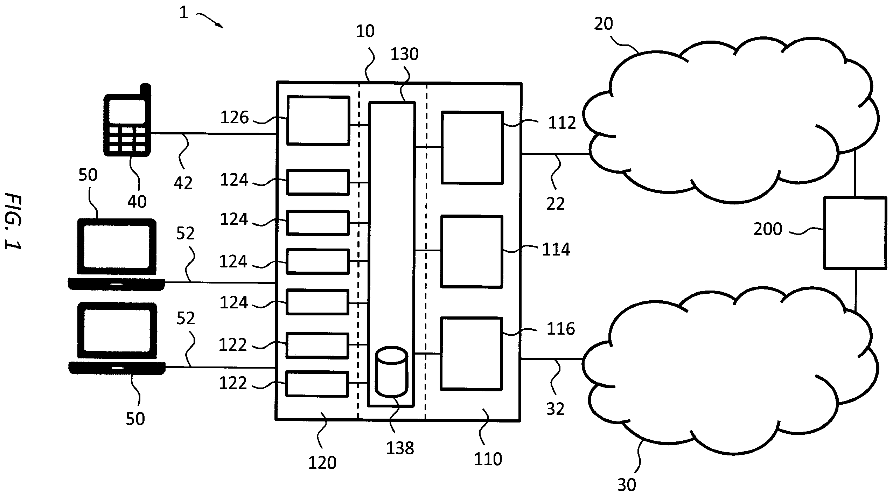

Comme illustré à la figure 1, le système 1 selon l'invention comprend un serveur mobile 10, un premier réseau de télécommunications 20, un second réseau de télécommunications 30 et une pluralité de terminaux (40, 50) connectés au serveur mobile 10 par une pluralité de liens de communications (42, 52).

Un terminal sans fil 40, par exemple du type smartphone ou tablette, est connecté au serveur mobile 10 par une liaison sans fil 42. Une telle liaison sans fil 42 peut être par exemple une liaison du type Wireless Local Area Network (WLAN) ou Bluetooth^{®} ou n'importe quel type de liaison utilisant un protocole sans fil.

Toujours en référence à la figure 1, deux ordinateurs 50 du type ordinateur portable sont connectés au serveur mobile 10 par des liaisons 52. La liaison 52 peut être du type liaison filaire Ethernet Local Area Network (LAN), ou bien liaison filaire par câble « Universal Serial Bus » (USB), ou n'importe quel type de liaison filaire, ou bien liaison sans fil par exemple du type Wireless Local Area Network (WLAN) ou Bluetooth^{®} ou n'importe quel type de liaison utilisant un protocole sans fil.

Le serveur 10 est mobile, c'est-à-dire qu'il est apte à se déplacer et n'est pas connecté à un réseau par un câble. Il est configuré pour se connecter à un ou à une pluralité de réseaux de télécommunications sur un lien de communication sans fil.

Dans l'exemple illustré à la figure 1, le serveur mobile 10 est connecté à un premier réseau 20 par un premier lien de communication 22 et à un second réseau de télécommunications 30 par un second lien de communication 32.

Le premier réseau 20 et le second réseau 30 peuvent être, par exemple, du type Wireless Local Area Network (WLAN) ou bien Wireless Wide Area Network (WWAN) tel que par exemple un réseau GSM, UMTS ou LTE Advanced.

Le serveur 10 étant mobile, les liens de communications 22 et 32 sont des liens de communication sans fil par exemple du type Wireless Local Area Network (WLAN), Wireless Wide Area Network (WWAN), réseau satellite, Private Mobile Communications (PMR) tel que par exemple un réseau TETRA, TETRAPOL, P25...

### Serveur mobile

En référence à la figure 1, le serveur mobile 10 comprend une interface d'accès 110 aux réseaux 20 et 30, une interface d'accès 120 des terminaux au serveur mobile 10 et un module de contrôle 130.

Le serveur mobile 10 est configuré pour établir un ou plusieurs liens de communication 22, 32 avec l'un ou les réseaux 20, 30 pour que les terminaux 40, 50 puissent communiquer à travers le ou les réseaux 20, 30 par l'intermédiaire du serveur mobile 10.

Afin de router les données applicatives des terminaux 40, 50 vers les réseaux 20, 30 ou des réseaux 20, 30 vers les terminaux 40, 50, le serveur mobile 10 comprend un routeur (non représenté).

Le module de contrôle 130 est configuré pour gérer la connectivité du serveur mobile 10 aux réseaux 20, 30 via l'interface d'accès 110, la connectivité des terminaux 40, 50 au serveur mobile 10 via l'interface d'accès 120 et les communications de données applicatives des terminaux 40, 50 à travers les réseaux 20, 30 via le routeur.

L'interface d'accès 110 aux réseaux 20 et 30 comprend une pluralité de modules de communication réseau 112, 114, 116. Dans cet exemple, les modules de communication réseau 112 et 116 sont des modems de communication WWAN et le module de communication 114 est un modem du type WLAN.

L'interface d'accès 120 des terminaux 40, 50 comprend une pluralité de modules de communication terminal 122, 124, 126 permettant aux terminaux 40, 50 de communiquer avec le serveur mobile 10.

Dans cet exemple, l'interface d'accès mobile 120 comprend deux modules de communication terminal USB 122, quatre modules de communication terminal Ethernet LAN 124 et un module de communication terminal WLAN 126.

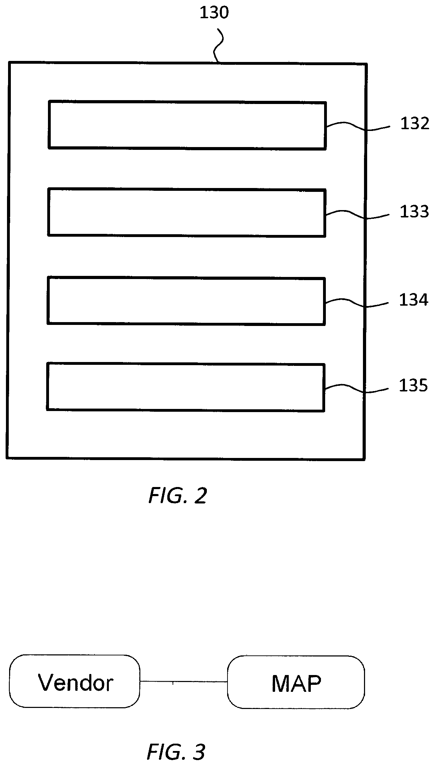

En référence à la figure 2, afin de gérer la connectivité des terminaux 40, 50 au serveur mobile 10, le module de contrôle 130 du serveur mobile 10 comprend un module 132 de gestion des connexions, un module 133 de contrôle d'accès des terminaux 40, 50, un module 134 de gestion de la configuration du protocole réseau (Internet Protocol ou IP en langue anglaise) et un module 135 de gestion de l'authentification.

Les modules 132, 133, 134, 135 permettent d'obtenir les paramètres de connectivité des terminaux 40, 50 au serveur mobile 10 sur les différents modules de communication terminal 122, 124, 126 de sorte que les terminaux 40, 50 puissent se connecter au serveur mobile 10 pour pouvoir communiquer des données applicatives à travers l'un ou les réseaux 20, 30 via les liens de communications 22, 32.

Le module de contrôle 130 peut aussi réaliser d'autres fonctions, telles que par exemple la gestion des règles de traduction d'adresse réseau (Network Address Translation ou NAT en langue anglaise), de redirection de ports suivant les protocoles (TCP,UDP...), dont les règles peuvent être définies par exemple dans le module 134 etc.

Le module 132 de gestion des connexions permet de gérer les communications entre le serveur mobile 10 et les terminaux 40, 50 sur les modules de communication terminal 122, 124, 126 notamment en gérant le type de module utilisé (LAN, WLAN...), le port sur lequel un terminal 40, 50 se connecte au serveur mobile 10 etc...

Dans cet exemple, le module 133 de contrôle d'accès des terminaux 40, 50 permet de gérer le filtrage des adresses physiques des interfaces réseaux (Media Access Control ou MAC en langue anglaise) selon le type de connectivité. Chaque terminal 40, 50 ayant une adresse MAC unique, le serveur mobile 10 peut définir une liste d'adresses MAC autorisées ou refusées permettant un contrôle d'accès.

Le module 134 de gestion de la configuration du protocole réseau IP permet de gérer le type de protocole utilisé (par exemple IPv4 ou IPv6), l'allocation d'adresse IP, l'adresse réseau IP (locale ou globale) pour joindre un serveur de nom de domaine (Domain Name System ou DNS en langue anglaise) situé dans le réseau 20, 30 etc. Le serveur mobile 10 peut comprendre un serveur Dynamic Host Configuration Protocol (DHCP) qui peut, par exemple, allouer à un terminal 40, 50 une adresse IP dans une plage d'adresse IP configurée. De manière alternative, le serveur DHCP peut être configuré en mode « relais » et obtenir une adresse IP à allouer à un terminal 40, 50 d'un serveur DHCP situé dans le réseau 20, 30.

Le module 135 de gestion de l'authentification permet de gérer l'authentification des terminaux 40, 50 par exemple auprès d'un serveur d'authentification (non représenté) situé dans le réseau 20, 30. Une telle gestion peut être réalisée, par exemple, à partir du type de serveur d'authentification (Radius, Terminal Access Controller Access-Control System (TACACS) etc), du type d'authentification locale (identifiant, mot de passe) ou à distance (configuration IP du serveur, clé de secret) etc.

Selon un aspect de l'invention, les paramètres de connectivité des terminaux 40, 50 au serveur mobile 10 via les interfaces de communications 122, 124, 126 sont organisés sous forme d'une arborescence basée sur le modèle défini dans le standard Open Mobile Alliance (OMA) en utilisant le protocole OMA Device Management (OMA DM).

Un tel protocole utilise des arborescences qui structurent les données sous forme de noeuds hiérarchisés. Dans le serveur mobile selon l'invention, un ou plusieurs paramètres de connectivité peuvent être associés à un noeud et certains noeuds peuvent ne pas être associés à des paramètres de connectivité.

Le serveur mobile 10 comprend un client OMA DM (non représenté) qui permet d'obtenir les paramètres de connectivité ainsi que leur valeur, par exemple d'un serveur OMA DM installé sur un serveur de connexion 200, par exemple à travers l'un ou les deux réseaux de télécommunications 20, 30. Les paramètres de connectivité sont stockés dans une zone mémoire 138, couplée au module de contrôle 130, pour permettre la gestion locale de la connectivité des terminaux 40, 50 par le serveur mobile 10 sans avoir besoin d'obtenir les valeurs des paramètres en passant systématiquement par l'un des réseaux 20, 30. Les paramètres de connectivité et/ou leur valeur peuvent aussi être stockés dans la zone mémoire 138 par exemple en usine lors de la fabrication du serveur mobile 10.

L'arborescence des données selon le modèle définit par OMA DM peut être par exemple codée en utilisant le format Extensible Markup Language (XML).

Le serveur mobile 10 implémente un client OMA DM pour la gestion de la connectivité du serveur mobile 10 aux réseaux 20, 30, ce qui permet avantageusement d'utiliser un protocole ouvert de gestion des terminaux au niveau du serveur mobile 10.

L'arborescence OMA DM organisant les paramètres de connectivité des terminaux 40, 50 à l'interface d'accès mobile 120 est définie dans un objet (ou noeud) appelé « MAP » (Mobile Access Point).

Dans cet exemple, l'objet « MAP » est lui-même rattaché dans l'arborescence OMA à un objet personnalisable appelé « Vendor » comme illustré à la figure 3. Bien entendu, l'objet « MAP » pourrait être défini ou rattaché à tout autre endroit de l'arborescence OMA.

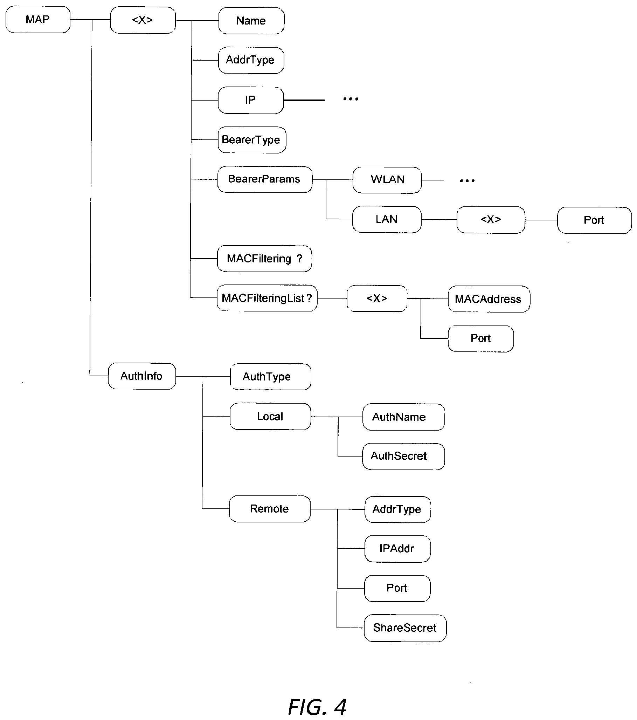

Un exemple d'arborescence OMA de l'objet « MAP » organisant les paramètres de connectivité pour le point d'accès mobile 120 est illustré à la figure 4. Les différents noeuds de cette arborescence peuvent être définis de la manière suivante :
L'objet « MAP » définit les paramètres de connectivité des terminaux 40, 50 au serveur mobile 10. L'objet « MAP/X » définit l'unique identifiant de l'objet « MAP » pour un support de connexion donné (par exemple WLAN ou LAN). L'objet « MAP/X/Name » définit le nom du compte. L'objet « MAP/X/AddrType » définit le format d'objet Addr (par exemple "IPv4" or "IPv6").

L'objet « MAP/X/IP » définit la gestion de l'adressage réseau IP comme décrit ci-après.

L'objet « MAP/X/BearerType » définit le type de support (bearer) utilisé par un terminal pour communiquer avec le point d'accès mobile. L'objet « MAP/X/BearerParams » définit les paramètres du support utilisé par un terminal pour communiquer avec le point d'accès mobile.

L'objet « MAP/X/BearerParams/WLAN » définit la sous-arborescence du support WLAN comme décrit ci-après.

L'objet « MAP/X/BearerParams/LAN » définit la sous-arborescence du support LAN. L'objet « MAP/X/BearerParams/LAN/<X> » définit un identifiant logique de numéro de port. L'objet « MAP/X/BearerParams/LAN/<X>/Port » définit le numéro de port du module LAN.

L'objet « MAP/X/MACFiltering » définit l'activation du filtrage d'adresse MAC pour le module déterminé (dans cet exemple WLAN ou LAN). L'objet « MAP/X/MACFilteringList » définit la liste des paramètres des adresses MAC additionnelles à filtrer pour un port donné. L'objet « MAP/X/MACFilteringList/<X> » définit différentes adresses MAC additionnelles à filtrer pour un port donné.

L'objet « MAP/X/MACFilteringList/<X>/MACAddress » définit une adresse MAC à filtrer. L'objet « MAP/X/MACFilteringList/<X>/Port » définit le port sur lequel l'adresse MAC doit être filtrée. Ce paramètre n'est pas valide si le type de module de communication terminal est « WLAN ».

L'objet « MAP/Authlnfo » fournit des informations d'authentification pour supporter divers contrôles d'accès au réseau basés sur le port, en utilisant par exemple le protocole 802.1X. Dans cet exemple, cet objet ou noeud est commun aux objets WLAN ET LAN. Bien entendu, il est aussi possible de le rattacher directement à l'objet « MAP/<X> » de manière à pouvoir différencier les informations d'authentification suivant le type de support de connexion (WLAN, LAN etc ...)

L'objet « MAP/Authlnfo/AuthType » définit le type d'authentification utilisée pour le point d'accès mobile 120.

L'objet « MAP/Authlnfo/Local » fournit les informations d'authentification lorsque le serveur d'authentification est local. L'objet « MAP/AuthInfo/Local/AuthName » définit le nom d'utilisateur pour l'authentification locale. L'objet « MAP/Authlnfo/Local/AuthSecret » définit le mot de passe pour l'authentification locale.

L'objet « MAP/Authlnfo/Remote » fournit les informations d'authentification lorsque le serveur d'authentification est distant.

L'objet « MAP/Authlnfo/Remote/AddrType » définit le format de l'objet IPAddr. L'objet « MAP/Authlnfo/Remote/IPAddr » définit l'adresse IP du serveur d'authentification. L'objet « MAP/Authlnfo/Remote/Port » définit le port de connexion du serveur d'authentification. L'objet « MAP/Authlnfo/Remote/ShareSecret » définit le mot de passe pour l'authentification à distance.

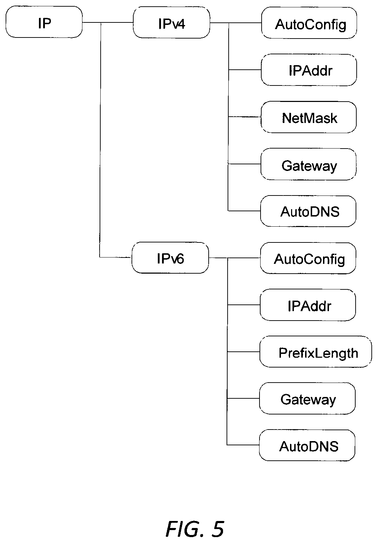

Un exemple d'arborescence OMA DM de l'objet « IP » de l'arborescence de la figure 4 est illustré à la figure 5. Les différents noeuds de cette arborescence peuvent être définis de la manière suivante :
L'objet « MAP/X/IP » est le noeud parent de la sous-arborescence IP. Ce noeud décrit l'adressage IPv4, IPv6. Les adresses IPv4, IPv6 sont assignées statiquement par le serveur DHCP qui peut être installé sur le serveur mobile 10. Les noms de domaine sont gérés dynamiquement en coopération avec un serveur Domain Name Server (DNS) externe.

L'objet « MAP/X/IP/IPv4 » définit la configuration d'adresse IPv4. L'objet « MAP/X/IP/IPv4/AutoConfig » indique si le terminal peut procéder lui-même à son autoconfiguration IP. L'objet « MAP/X/IP/IPv4/IPAddr » définit l'adresse IPv4. L'objet « MAP/X/IP/IPv4/NetMask » définit le masque de réseau IPv4. L'objet « MAP/X/IP/IPv4/Gateway » définit l'adresse de la passerelle IPv4 de sortie de réseau auquel est connecté le serveur mobile 10. L'objet « MAP/X/IP/IPv4/AutoDNS » permet l'activation de la configuration automatique de l'adresse DNS en adressage IPv4, par exemple en utilisant le protocol [RFC2132].

L'objet « MAP/X/IP/IPv6 » définit la configuration d'adresse IPv6. L'objet « MAP/X/IP/IPv6/AutoConfig » indique si le terminal peut procéder lui-même à son autoconfiguration IP. L'objet « MAP/X/IP/IPv6/IPAddr » définit l'adresse IPv6. L'objet « MAP/X/IP/IPv6/PrefixLength » définit la longueur du préfixe d'adresse IPv6 [RFC4291]. L'objet « MAP/X/IP/IPv6/Gateway » définit la passerelle IPv6. L'objet « MAP/X/IP/IPv6/AutoDNS » définit permet l'activation de la configuration automatique de l'adresse DNS en adressage IPv6, par exemple en utilisant le protocol [RFC2132].

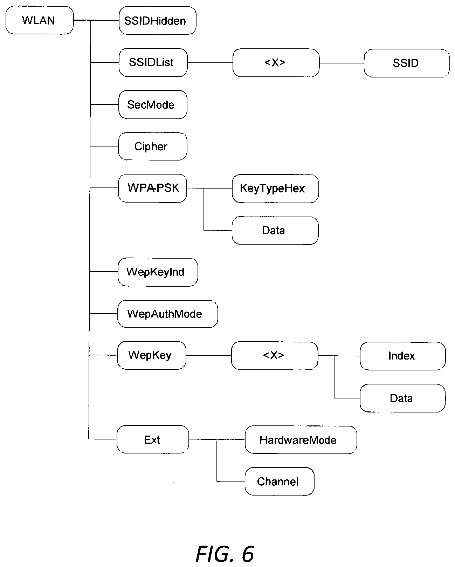

Un exemple d'arborescence OMA DM de l'objet « WLAN » de l'arborescence de la figure 4 est illustré à la figure 6. Les différents noeuds de cette arborescence peuvent être définis de la manière suivante :
L'objet « MAP/X/BearerParams/WLAN » définit les paramètres spécifiques de connectivité pour établir un lien de communication WLAN 42 avec un terminal 40, 50 sur le module de communication terminal WLAN 126.

L'objet « MAP/X/BearerParams/WLAN/SSIDHidden » indique si l'identifiant de sous-réseau est caché (valeur TRUE) ou non (valeur FALSE).

L'objet « MAP/X/BearerParams/WLAN/SSIDList » définit la liste des identifiants de sous-réseau additionnels.

L'objet « MAP/X/BearerParams/WLAN/SSIDList/X » indique que seul un identifiant de sous-réseau est supporté pour le point d'accès WLAN.

L'objet « MAP/X/BearerParams/WLAN/SSIDList/<X>/SSID » indique l'identifiant de sous-réseau.

L'objet « MAP/X/BearerParams/WLAN/SecMode » définit le mode de sécurité pour le lien de communication WLAN 42.

L'objet « MAP/X/BearerParams/WLAN/Cipher » définit le chiffrement de cryptage utilisé sur le lien de communication WLAN 42.

L'objet « MAP/X/BearerParams/WLAN/WPA-PSK » définit les paramètres du mode connu de cryptage Wifi Protected Access Pre-Shared Key (WPA-PSK).

L'objet « MAP/X/BearerParams/WLAN/WPA-PSK/KeyTypeHex » indique si les données WPA-PSK sont fournies sous forme d'une séquence de nombres hexadécimaux ou non.

L'objet « MAP/X/BearerParams/WLAN/WPA-PSK/Data » permet de fournir la clé WPA-PSK.

L'objet « MAP/X/BearerParams/WLAN/WepKeylnd » définit l'index de la clé WEP (de 0 à 3).

L'objet « MAP/X/BearerParams/WLAN/WepAuthMode » précise le mode connu d'authentification Wired Equivalent Privacy (WEP).

L'objet « MAP/X/BearerParams/WLAN/WepKey » définit la longueur et les données pour la clé WEP.

L'objet « MAP/X/BearerParams/WLAN/WepKey/X » définit les différentes clés WEP.

L'objet « MAP/X/BearerParams/WLAN/WepKey/X/Index » indique l'index de la clé WEP. Par exemple, l'index peut être un nombre entier compris entre 1 et 3 et une première clé peut être enregistrée sous l'index 0, une seconde sous l'index 1 etc.

L'objet « MAP/X/BearerParams/WLAN/WepKey/X/Data » indique la clé WEP qui peut être, par exemple, d'une longueur de 5 octets ou bien de 13 octets.

L'objet « MAP/X/BearerParams/WLAN/Ext » permet de définir des paramètres annexes.

L'objet « MAP/X/BearerParams/WLAN/Ext/HardwareMode » définit la version du protocole WLAN ETSI (802.11) utilisé (a/b/g/n avec optionnellement une indication de la largeur du canal (20 ou 40 MHz) et si c'est la partie supérieure ou inférieure qui est utilisée (pour 40 MHz)).

L'objet « MAP/X/BearerParams/WLAN/Ext/Channel » définit le canal WLAN (par exemple un identifiant logique allant de 0 à 11, 13 ou 14).

Les objets « MAP/X/BearerParams/WLAN/Ext/HardwareMode » et « MAP/X/BearerParams/WLAN/Ext/Channel » sont spécifiques à la gestion de la connectivité des terminaux 40, 50, c'est-à-dire à l'interface d'accès 120 des terminaux 40, 50 au serveur mobile 10, et n'ont pas de sens pour l'interface d'accès 110 aux réseaux 20, 30 dite interface « Network Access Point » (NAP).

### Mise en œuvre de l'invention

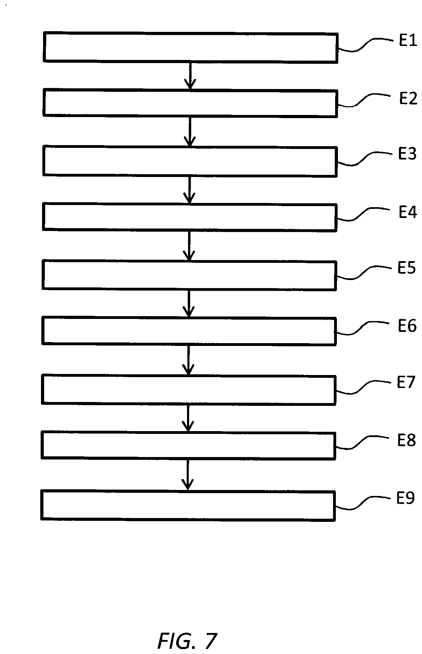

Un exemple de mise en oeuvre de l'invention va maintenant être présenté en référence à la figure 7.

Dans cet exemple, le serveur mobile 10 est préalablement connecté à au moins un des réseaux 20, 30. Bien entendu, le serveur mobile 10 peut se connecter à un réseau 20, 30 pendant les étapes de connexion d'un terminal 40, 50 audit serveur mobile 10.

Le module 132 de gestion des connexions du serveur mobile 10 extrait, dans une étape E1, de l'objet associé (par exemple WLAN) de la zone mémoire 138 une ou plusieurs valeurs de paramètres de connectivité associées, tel que par exemple le Service Set Identifier (SSID) du module de communication terminal WLAN 126 qu'il diffuse à destination de terminaux qui souhaiteraient se connecter au serveur mobile 10 pour communiquer à travers l'un ou les réseaux 20, 30.

Dans une étape E2, le terminal 40, 50 initialise une connexion avec le serveur mobile 10 au niveau de la couche de transport, par exemple WLAN (à partir du SSID WLAN émit par le serveur mobile 10) ou LAN.

Dans une étape E3, le serveur mobile 10 reçoit du terminal 40, 50 une information de contrôle d'accès, par exemple son adresse physique MAC, et le module 133 de contrôle d'accès vérifie, dans une étape E4 dite de filtrage, à partir de l'adresse physique MAC reçue et de règles de filtrages extraites (dans une étape E5) de la zone mémoire 138, que le terminal 40, 50 n'est pas interdit de se connecter au serveur mobile 10 pour communiquer à travers l'un ou les réseaux 20, 30.

le module 134 de gestion de la configuration du protocole réseau IP du serveur mobile 10 extrait de la zone mémoire 138 des valeurs de configuration IP dans une étape E6 et alloue notamment une adresse réseau IP au terminal 40, 50 qu'il lui fournit dans une étape E7.

Le module 135 de gestion de l'authentification gère alors (localement ou à distance) l'authentification du terminal 40, 50 dans une étape E8, par exemple, à partir du type de serveur d'authentification (Radius, Terminal Access Controller Access-Control System (TACACS) etc), du type d'authentification locale (identifiant, mot de passe) ou à distance (configuration IP du serveur, clé de secret) etc.

Lorsque le terminal 40, 50 est authentifié, il est autorisé à communiquer, via le module de communication terminal 122, 124, 126 associé et au moins l'un modules de communication réseau 112, 114, 116, à travers l'un ou les réseaux 20, 30 via le serveur mobile 10 dans une étape E9.

Le serveur mobile selon l'invention permet donc à une pluralité de terminaux de se connecter audit serveur par une pluralité de modules de communication terminal de types différents pour communiquer avec un ou plusieurs réseaux.

Une telle connectivité est gérée par l'utilisation d'une structure arborescente du type OMA regroupant les paramètres de connectivité en utilisant le protocole OMA DM. Une telle structure est stockée localement dans le serveur mobile qui n'a donc plus notamment à aller chercher systématiquement les valeurs de ces paramètres dans l'un des réseaux.

L'utilisation du modèle ouvert OMA permet de créer des objets spécifiques au serveur mobile pour gérer différents types de liens de communication locaux (WLAN, LAN, USB...) en utilisant un protocole et une arborescence efficaces, ouverts et simples.

## Revendications

1. Serveur mobile de gestion de la connectivité de terminaux (40, 50) pour la communication à travers une pluralité de réseaux de télécommunications (20, 30), le serveur mobile (10) comprenant :
- au moins un module de communication terminal (122, 124, 126) configuré pour communiquer avec les terminaux (40, 50),
- un module de contrôle (130) du serveur mobile (10) comprenant un module de gestion des connexions (132), un module de contrôle d'accès (133) des terminaux (40, 50), un module de gestion de la configuration du protocole réseau (134) et un module de gestion de l'authentification (135), le module de contrôle (130) étant configuré pour obtenir les paramètres de connectivité des terminaux (40, 50) au serveur mobile (10) sur le au moins un module de communication terminal (122, 124, 126),
- une pluralité de modules de communication réseau (112, 114, 116) configurés pour communiquer avec une pluralité de réseaux de télécommunications (20, 30),
- une zone mémoire (138) dans laquelle sont stockées des valeurs de paramètres de connectivité du terminal (40, 50), couplée au module de contrôle (130), permettant au terminal de se connecter au serveur mobile (20, 30),
le serveur mobile (10) étant configuré pour :
- se connecter à une pluralité de réseaux de télécommunications (20, 30) via la pluralité de modules de communication réseau (112, 114, 116),
- extraire de la zone mémoire (138) un ensemble de valeurs de paramètres de connectivité des terminaux (40, 50),
- autoriser ou non, à partir de l'ensemble de valeurs de paramètres de connectivité extrait, la connexion d'un terminal (40, 50) via au moins l'un des modules de communication terminal (122, 124, 126) de sorte que le terminal (40, 50) puisse communiquer des données applicatives à travers au moins l'un des réseaux de télécommunications (20, 30) via au moins ledit module de communication terminal (122, 124, 126) et au moins l'un des modules de communication réseau (112, 114, 116),
les paramètres de connectivité étant organisés dans la zone mémoire (138) sous la forme d'une arborescence comprenant une pluralité d'objets hiérarchisés regroupant chacun un ou une pluralité de paramètres de connectivité, l'arborescence étant basée sur le modèle Open Mobile Alliance (OMA) comprenant un objet appelé Mobile Access Point (MAP) définissant les paramètres de connectivité des terminaux (40, 50) et les objets étant manipulés en utilisant le protocole Open Mobile Alliance Device Management.

2. Serveur selon la revendication précédente, ledit serveur mobile (10) étant configuré pour établir une connexion avec le terminal (40, 50) via au moins un des modules de communication terminal (122, 124, 126), de préférence de type WLAN ou LAN, pour échanger des informations permettant le contrôle d'accès du terminal (40, 50) et/ou la configuration d'adressage réseau du terminal (40, 50).

3. Serveur selon l'une des revendications précédentes, ledit serveur mobile (10) étant configuré pour analyser et/ou comparer une information reçue du terminal (40, 50) permettant le contrôle d'accès dudit terminal (40, 50) à partir de l'ensemble de valeurs de paramètres de connectivité extrait de la zone mémoire (138).

4. Serveur selon l'une des revendications précédentes, ledit serveur mobile (10) étant configuré pour déterminer la configuration d'adressage réseau du terminal (40, 50) à partir d'un ensemble de valeurs de paramètres de configuration d'adressage réseau extrait de la zone mémoire (138).

5. Serveur selon l'une des revendications précédentes, ledit serveur mobile (10) étant configuré pour permettre l'authentification du terminal (40, 50) localement à partir de paramètres d'authentification stockés dans la zone mémoire (138) ou bien à distance en communiquant avec un serveur d'authentification situé dans l'un des réseaux (20, 30).

6. Système de gestion de la connectivité de terminaux (40, 50) à une pluralité de réseaux de télécommunications (20, 30), ledit système (1) comprenant :
- une pluralité de réseaux de télécommunications (20, 30),
- un serveur mobile (10) selon l'une des revendications précédentes 1 à 5,
- les terminaux (40, 50) configurés pour :
o établir une connexion via au moins un des modules de communication terminal (122, 124, 126), de préférence du type WLAN ou LAN, pour échanger des informations permettant le contrôle d'accès dudit terminal (40, 50) et/ou la configuration d'adressage réseau dudit terminal (40, 50) et/ou,
o communiquer des données applicatives à travers la pluralité de réseaux de télécommunications (20, 30) via au moins un des modules de communication terminal (122, 124, 126) et au moins un des modules de communication réseau (112, 114, 116).

7. Procédé, mis en oeuvre par un serveur mobile (10) selon l'une des revendications précédentes 1 à 5, de gestion de la connectivité des terminaux (40, 50) pour la communication d'un des terminaux (40, 50) via le serveur mobile (10) à travers une pluralité de réseaux de télécommunications (20, 30), le procédé comprenant :
- une étape de connexion à au moins un d'une pluralité de réseaux de télécommunications (20, 30) via au moins un de la pluralité de modules de communication réseau (112, 114, 116),
- une étape d'extraction de la zone mémoire (138) d'un ensemble de valeurs de paramètres de connectivité du terminal (40, 50),
- une étape d'autorisation ou non, à partir de l'ensemble de valeurs de paramètres de connectivité extrait, de la connexion du terminal (40, 50) via au moins l'un des modules de communication terminal (122, 124, 126) de sorte que le terminal (40, 50) puisse communiquer des données applicatives à travers au moins l'un des réseaux de télécommunications (20, 30) via au moins ledit module de communication terminal (122, 124, 126) et au moins l'un des modules de communication réseau (112, 114, 116)

8. Procédé selon la revendication précédente, le procédé comprenant :
- une étape de connexion d'un des terminaux (40, 50) via au moins un des modules de communication terminal (122, 124, 126), de préférence de type WLAN ou LAN, pour échanger des informations permettant le contrôle d'accès d'un des terminaux (40, 50) et/ou la configuration d'adressage réseau d'un des terminaux (40, 50) et/ou,
- une étape d'analyse et/ou de filtrage d'une information reçue permettant le contrôle d'accès d'un des terminaux (40, 50) à partir de l'ensemble de valeurs de paramètres de connectivité extrait de la zone mémoire (138), et/ou,
- une étape de détermination de la configuration d'adressage réseau d'un des terminaux (40, 50) à partir d'un ensemble de valeurs de paramètres de configuration d'adressage réseau extrait de la zone mémoire (138), et/ou
- une étape de fourniture à un des terminaux (40, 50) d'une ou plusieurs valeurs de l'ensemble de valeurs de paramètres de connectivité extrait de la zone mémoire (138), et/ou,
- une étape d'authentification d'un des terminaux (40, 50), localement à partir de paramètres d'authentification stockés dans la zone mémoire ou bien à distance en communiquant avec un serveur d'authentification situé dans l'un des réseaux, de préférence en utilisant un protocole d'authentification basé sur la norme connue 802.1x et/ou,
- une étape de communication d'un des terminaux (40, 50) à travers les réseaux (20, 30) via le ou les module de communication terminal (122, 124, 126) et au moins un module de communication réseau (112, 114, 116).

9. Support comprenant des instructions exécutables par un ordinateur pour la mise en oeuvre du procédé selon l'une des revendications 7 et 8.

## Patentansprüche

1. Mobilserver für die Steuerung der Anschlussfähigkeit von Endgeräten (40, 50) für die Kommunikation über eine Vielzahl von Telekommunikationsnetzen (20,30), wobei der Mobilserver (10) umfasst:
- mindestens ein Endgerät-Kommunikationsmodul (122,124,126), das für die Kommunikation mit den Endgeräten (40,50) konfiguriert ist,
- ein Kontrollmodul (130) des Mobilservers (10), das ein Steuerungsmodul der Verbindungen (132), ein Modul für die Zugangskontrolle (133) der Endgeräte (40,50), ein Steuerungsmodul für die Konfiguration des Netzwerkprotokolls (134) und ein Steuerungsmodul für die Authentifizierung (135) umfasst, wobei das Kontrollmodul (130) dazu konfiguriert ist, die Parameter der Anschlussfähigkeit der Endgeräte (40,50) am Mobilserver (10) auf dem mindestens einen Endgerät-Kommunikationsmodul (122,124,126) zu erhalten,
- eine Vielzahl von Netzwerk-Kommunikationsmodulen (112,114,116), die dazu konfiguriert sind, mit einer Vielzahl von Telekommunikationsnetzen (20,30) zu kommunizieren,
- einen Speicherbereich (138), in dem Parameterwerte der Anschlussfähigkeit des Endgeräts (40,50) gespeichert sind, gekoppelt mit dem Kontrollmodul (130), was dem Endgerät einen Anschluss zum Mobilserver (20,30) ermöglicht,
wobei der Mobilserver (10) konfiguriert ist, um
- über eine Vielzahl von Netzwerk-Kommunikationsmodulen (112,114,116) eine Verbindung zu einer Vielzahl von Telekommunikationsnetzen (20,30) herzustellen,
- aus dem Speicherbereich (138) eine Reihe von Parameterwerten der Anschlussfähigkeit der Endgeräte (40,50) zu entnehmen,
- anhand der entnommenen Reihe von Parameterwerten der Anschlussfähigkeit die Verbindung eines Endgeräts (40,50) über mindestens eins der Endgerät-Kommunikationsmodule (122,124,126) zu erlauben oder nicht, sodass das Endgerät (40,50) über mindestens eins der Telekommunikationsnetze (20,30) durch mindestens das Endgerät-Kommunikationsmodul (122,124,126) und durch mindestens eins der Netzwerk-Kommunikationsmodule (112,114,116) Applikationsdaten kommunizieren kann,
wobei die Parameter der Anschlussfähigkeit im Speicherbereich (138) in Form einer Baumstruktur organisiert sind, die eine Vielzahl von hierarchisierten Objekten umfasst, die jeweils einen oder eine Vielzahl von Parametern der Anschlussfähigkeit zusammenfassen, wobei die Baumstruktur auf das Modell Open Mobile Alliance (OMA) basiert, welches ein als Mobile Access Point (MAP) bezeichnetes Objekt umfasst, das die Parameter der Anschlussfähigkeit der Endgeräte (40,50) definiert, und wobei die Objekte unter Anwendung des Protokolls Open Mobile Alliance Device Management gehandhabt werden.

2. Server nach vorausgehendem Anspruch, wobei der Mobilserver (10) dazu konfiguriert ist, mit dem Endgerät (40,50) über mindestens eins der Endgerät-Kommunikationsmodule (122,124,126), vorzugsweise vom Typ WLAN oder LAN, eine Verbindung herzustellen, um Informationen auszutauschen, die die Zugangskontrolle des Endgeräts (40,50) und/oder das Konfigurieren der Netzwerkadresse des Endgeräts (40,50) ermöglichen.

3. Server nach einem der vorausgehenden Ansprüche, wobei der Mobilserver (10) dazu konfiguriert ist, eine vom Endgerät (40,50) erhaltene Information zu analysieren und/oder zu vergleichen, was anhand der Reihe der aus dem Speicherbereich (138) entnommenen Parametern der Anschlussfähigkeit die Zugangskontrolle dieses Endgeräts (40,50) ermöglicht.

4. Server nach einem der vorausgehenden Ansprüche, wobei der Mobilserver (10) dazu konfiguriert ist, anhand einer Reihe von aus dem Speicherbereich (138) entnommenen Parameterwerten für das Konfigurieren der Netzwerkadresse die Konfiguration der Netzwerkadresse des Endgeräts (40, 50) zu bestimmen.

5. Server nach einem der vorausgehenden Ansprüche, wobei der Mobilserver (10) dazu konfiguriert ist, anhand von im Speicherbereich (138) gespeicherten Authentifizierungsparametern vor Ort bzw. entfernt, indem mit einem Authentifizierungsserver in einem der Netzwerke (20,30) kommuniziert wird, die Authentifizierung des Endgeräts (40,50) zu ermöglichen.

6. Steuerungssystem der Anschlussfähigkeit von Endgeräten (40,50) an eine Vielzahl von Telekommunikationsnetzen (20,30), wobei dieses System (1) umfasst:
- eine Vielzahl von Telekommunikationsnetzen (20,30),
- einen Mobilserver (10) nach einem der vorausgehenden Ansprüche 1 bis 5,
- die Endgeräte (40,50), die dazu konfiguriert sind, um:
o über mindestens eins der Endgerät-Kommunikationsmodule (122,124,126), vorzugsweise vom Typ WLAN oder LAN, eine Verbindung herzustellen, um Informationen auszutauschen, die die Zugangskontrolle des Endgeräts (40,50) und/oder das Konfigurieren der Netzwerkadresse des Endgeräts (40,50) ermöglichen und/oder,
o durch die Vielzahl von Telekommunikationsnetzen (20,30) über mindestens eins der Endgerät-Kommunikationsmodule (122,124,126) und über mindestens eins der Netzwerk-Kommunikationsmodule (112,114,116) Applikationsdaten zu kommunizieren.

7. Von einem Mobilserver (10) umgesetztes Verfahren nach einem der Ansprüche 1 bis 5, zur Steuerung der Anschlussfähigkeit der Endgeräte (40,50) für die Kommunikation eines der Endgeräte (40,50) über den Mobilserver (10) durch eine Vielzahl von Telekommunikationsnetzen (20,30), wobei das Verfahren umfasst:
- einen Schritt der Verbindungsherstellung zu mindestens einem aus einer Vielzahl von Telekommunikationsnetzen (20,30) über mindestens eins der Vielzahl von Netzwerkkommunikationsmodulen (112,114,116),
- einen Schritt der Entnahme einer Reihe von Parameterwerten der Anschlussfähigkeit des Endgeräts (40,50) aus dem Speicherbereich (138),
- einen Schritt der Genehmigung oder nicht des Anschlusses des Endgeräts (40,50) anhand der Reihe der entnommenen Parameterwerten der Anschlussfähigkeit über mindestens eins der Endgerät-Kommunikationsmodule (122,124,126), sodass das Endgerät (40,50) durch mindestens eins der Telekommunikationsnetze (20,30) über mindestens das Endgerät-Kommunikationsmodul (122,124,126) und mindestens eins der Netzwerkkommunikationsmodule (112,114,116) Applikationsdaten kommunizieren kann.

8. Verfahren nach vorausgehendem Anspruch, wobei das Verfahren umfasst:
- einen Schritt der Verbindungsherstellung eines der Endgeräte (40,50) über mindestens eins der Endgerät-Kommunikationsmodule (122,124,126), vorzugsweise vom Typ WLAN oder LAN, um Informationen auszutauschen, die die Zugangskontrolle eines der Endgeräte (40,50) und/oder das Konfigurieren der Netzwerkadresse eines der Endgeräte (40,50) ermöglichen und/oder,
- einen Schritt der Analyse und/oder des Filterns einer erhaltenen Information anhand der Reihe vom Speicherbereich (138) entnommenen Parameterwerte der Anschlussfähigkeit, die die Zugangskontrolle eines der Endgeräte (40,50) ermöglicht, und/oder
- einen Schritt des Bestimmens der Konfiguration der Netzwerkadresse eines der Endgeräte (40,50) anhand einer Reihe vom Speicherbereich (138) entnommenen Parameterwerten für die Konfiguration der Netzwerkadresse, und/oder
- einen Schritt der Bereitstellung eines oder mehrerer Werte aus der Reihe von aus dem Speicherbereich (138) entnommenen Parameterwerten für die Anschlussfähigkeit für eins der Endgeräte (40,50), und/oder
- einen Schritt der Authentifizierung eines der Endgeräte (40,50) vor Ort anhand von im Speicherbereich gespeicherten Authentifizierungsparametern oder entfernt durch Kommunikation mit einem in einem der Netzwerke befindlichen Authentifizierungsserver, vorzugsweise unter Anwendung eines auf der unter 802.1x bekannten Norm basierenden Authentifizierungsprotokolls und/oder,
- einen Schritt der Kommunikation eines der Endgeräte (40,50) durch die Netzwerke (20,30) über das bzw. die Endgerät-Kommunikationsmodule (122,124,126) und mindestens ein Netzwerkkommunikationsmodul (112,114,116).

9. Datenträger mit den durch einen Computer für die Anwendung des Verfahrens nach einem der Ansprüche 7 und 8 ausführbaren Anweisungen.

## Claims

1. Mobile server for managing the connectivity of terminals (40, 50) for communicating through a plurality of telecommunications networks (20, 30), the mobile server (10) including:
- at least one terminal communication module (122, 124, 126) configured to communicate with said terminals (40, 50),
- a control module (130) of the mobile server (10) comprising a connection management module (132), an access control module (133) of the terminals (40, 50), a configuration management module of the network protocol (134) and an authentication management module (135), the control module (130) being configured to obtain the connectivity parameters of the terminals (40, 50) to the mobile server (10) on the at least one terminal communication module (122, 124, 126),
- a plurality of network communication modules (112, 114, 116) configured to communicate with a plurality of telecommunications networks (20, 30),
- a storage area (138) in which are stored connectivity parameter values of the terminal (40, 50), coupled to the control module (130), enabling the terminal to connect to the mobile server (20, 30),
the mobile server (10) being configured to:
- connect to a plurality of telecommunications networks (20, 30) via the plurality of network communication modules (112, 114, 116),
- extract a set of connectivity parameter values of the terminal (40, 50) from the storage area (138),
- allow or not allow, on the basis of the extracted set of connectivity parameter values, the connection of the terminal (40, 50) via at least one of the terminal communication modules (122, 124, 126) so that the terminal (40, 50) can communicate applicative data through at least one of the telecommunications networks (20, 30) via at least said terminal communication module (122, 124,126) and at least one of the network communication modules (112,114, 116),
the connectivity parameters being organized in the storage area (138) in the form of a tree structure comprising a plurality of hierarchical objects each grouping together one or a plurality of connectivity parameters, the tree structure being based on the Open Mobile Alliance model ( OMA) comprising an object called Mobile Access Point (MAP) defining the connectivity parameters of the terminals (40, 50) and the objects being handled using the Open Mobile Alliance Device Management protocol.

2. Server according to the preceding claim, said mobile server (10) being configured to establish a connection with the terminal (40, 50) via at least one of the terminal communication modules (122, 124, 126), preferably of WLAN or LAN type, to exchange information items enabling the access control of the terminal (40, 50) and/or the network addressing configuration of the terminal (40, 50).

3. Server according to one of the preceding claims, said mobile server (10) being configured to analyse and/or to compare an information item received from the terminal (40, 50) enabling the access control of said terminal (40, 50) from the set of connectivity parameter values extracted from the storage area (138) .

4. Server according to one of the preceding claims, said mobile server (10) being configured to determine the network addressing configuration of the terminal (40, 50) from a set of network addressing configuration parameter values extracted from the storage area (138).

5. Server according to one of the preceding claims, said mobile server (10) being configured to enable the authentication of the terminal (40, 50) locally from authentication parameters stored in the storage area (138) or instead remotely while communicating with an authentication server situated in one of the networks (20, 30).

6. System for managing the connectivity of terminals (40, 50) to a plurality of telecommunications networks (20, 30), said system (1) including:
- a plurality of telecommunications networks (20, 30),
- a mobile server (10) according to one of the preceding claims 1 to 5,
- the terminals configured to:
- establish a connection via at least one of the terminal communication modules (122, 124, 126), preferably of the WLAN or LAN type, to exchange information items enabling the access control of said terminal (40, 50) and/or the network addressing configuration of said terminal (40, 50) and/or,
- communicate applicative data through the plurality of telecommunications networks (20, 30) via at least one of the terminal communication modules (122, 124, 126) and at least one of the network communication modules (112,114,116) .

7. Method, implemented by a mobile server (10) according to one of the preceding claims 1 to 5, for managing the connectivity of the terminals (40, 50) for the communication of the terminals (40, 50) via the mobile server (10) through a plurality of telecommunications networks (20, 30), the method including:
- a step of connecting to at least one of a plurality of telecommunications networks (20, 30) via at least one of the plurality of network communication modules (112, 114, 116),
- a step of extracting a set of connectivity parameter values of the terminal (40, 50) from the storage area (138),
- a step of allowing or not allowing, from the extracted set of connectivity parameter values, the connection of the terminal (40, 50) via at least one of the terminal communication modules (122, 124, 126) so that the terminal (40, 50) can communicate applicative data through at least one of the telecommunications networks (20, 30) via at least said terminal communication module (122, 124,126) and at least one of the network communication modules (112,114, 116)

8. Method according to the preceding claim, the method including:
- a step of connecting one of the terminals (40, 50) via at least one of the terminal communication modules (122, 124, 126), preferably of WLAN or LAN type, to exchange information items enabling the access control of one of the terminals (40, 50) and/or the network addressing configuration of one of the terminals (40, 50) and/or,
- a step of analysing and/or filtering an information item received enabling the access control of one of the terminals (40, 50) from the set of connectivity parameter values extracted from the storage area (138), and/or,
- a step of determining the network addressing configuration of one of the terminals (40, 50) from a set of network addressing configuration parameter values extracted from the storage area (138), and/or
- a step of supplying to one of the terminals (40, 50) one or more values of the set of connectivity parameter values extracted from the storage area (138), and/or,
- a step of authenticating one of the terminals (40, 50), locally from authentication parameters stored in the storage area or instead remotely while communicating with an authentication server situated in one of the networks, preferably using an authentication protocol based on the known norm 802.lx and/or,
- a step of communication of one of the terminals (40, 50) through the networks (20, 30) 30 via the terminal communication module(s) (122, 124, 126) and at least one network communication module (112, 114,116).

9. Support including instructions executable by a computer for the implementation of the method according to one of claims 7 and 8.
